# FASCICULE DE BREVET EUROPEEN

(11) **EP 0 890 621 B1**
(45) Date de publication et mention de la délivrance du brevet: **21.12.2005**
(21) Numéro de dépôt: 98401622.0
(22) Date de dépôt: 30.06.1998
(51) Int. Cl.: C09D 157/00, C08F 2/22, C09D 5/02

(54) **Revêtement**
Beschichtungsstoff
Coating

(30) Priorité: 08.07.1997 FR 9708666
(43) Date de publication de la demande: 13.01.1999
(73) Titulaire: Arkema, 92800 Puteaux (FR)
(72) Inventeur: Juhue, Didier, 92300 Levallois-Perret (FR); Duqué, Baudouin, 27800 Saint Victor d'Epine-Brionne (FR)

(56) Documents cités:
- EP-A- 0 655 475
- DE-A- 19 636 490
- "nen-iso 37 gevulcaniseerde of thermoplastische rubber, bepaling van de trek- en rekeigenschappen" , NEDERLANDS NORMALISATIE INSTITUUT , DELFT XP000197953 * page 4 - page 5; figures 2,3 *
- PATENT ABSTRACTS OF JAPAN vol. 013, no. 105 (C-575), 13 mars 1989 & JP 63 278963 A (OSAKA SODA CO LTD), 16 novembre 1988
- DATABASE WPI Section Ch, Week 7552 Derwent Publications Ltd., London, GB; Class A14, AN 75-85559W XP002083587 & JP 50 116582 A (KUREHA CHEM IND CO LTD) , 11 septembre 1975
- DATABASE WPI Section Ch, Week 7552 Derwent Publications Ltd., London, GB; Class A14, AN 75-85560W XP002083588 & JP 50 116583 A (KUREHA CHEM IND CO LTD) , 11 septembre 1975

## Description

L'invention concerne les procédés de préparation de latex qui conduisent aux revêtements de surface tels que vernis et peintures, en particulier les revêtements de matériaux de construction comme briques, bétons, pierres, verres, métaux et matières plastiques. Elle concerne en particulier les procédés de préparation de latex qui conduisent aux revêtements flexibles à faibles collant et tension superficiels. Elle concerne aussi les latex qui conduisent après application et séchage aux revêtements ainsi que les procédés pour le traitement de surface.

Par latex on entend des dispersions aqueuses de particules de polymères telles qu'elles sont obtenues par polymérisation en émulsion.

La plupart des latex pour revêtements flexibles sont à base de polymères de basse température de transition vitreuse, désignée par Tg. Les films ou revêtements issus de tels latex présentent, en général, un collant superficiel ou "tack" assez important et donc rédhibitoire pour beaucoup d'applications, en particulier en raison de l'encrassement.

La solution la plus courante pour réduire le collant, hormis augmenter la Tg en sacrifiant la flexibilité, est de réticuler les films chimiquement ou photochimiquement. Cette solution ne donne pas entière satisfaction.

Une autre solution a été décrite par USP 5 308 820. Elle consiste à mélanger une dispersion d'un polymère "dur" apportant le faible collant et une dispersion contenant un polymère "mou" apportant la flexibilité.

Par ailleurs, on peut apporter de l'hydrophobie, ou réduire la tension superficielle des films, par l'ajout de polymères hydrophobes tels que les polymères siliconés. Mais ceux-ci ne corrigent pas la tendance à l'encrassement car ils présentent une basse Tg et sont oléophilles.

Une autre solution est d'introduire des polymères fluorés comme décrit dans FR 2 725 721.

DE-A-196 36 490 décrit la production de dispersions aqueuses.

Il apparait donc difficile, voire impossible, de trouver un revêtement ayant à la fois la flexibilité, l'hydrophobie et le faible collant.

Le problème que cherche à résoudre l'invention consiste donc en la mise au point de procédés de préparation des revêtements répondant aux critères cités précédemment.

Cet objectif a été atteint de manière surprenante à l'aide de dispersions aqueuses de polymères acryliques pouvant être obtenus par polymérisation en émulsion ou suspension d'un ou de plusieurs monomères comprenant des monomères acryliques spéciaux, selon la revendication 1.

Ces latex, appliqués sur un support quelconque, donnent après séchage et formation de film un revêtement flexible et à faible collant et tension superficiels.

La présente invention a donc d'abord pour objet un revêtement flexible à faible "tack" et à faible tension superficielle.

La flexibilité selon l'invention est l'allongement à la rupture d'un film exprimé en % et déterminé selon le protocole décrit dans l'exemple 4.

Le"tack" selon l'invention est mesuré selon une norme interne à la demanderesse et exprimé en J/m². Le protocole de mesure est décrit dans l'exemple 4.

L'hydrophobie est caractérisée par l'angle de contact exprimé en degré formé par une goutte d'eau et le film.

Les films de l'invention présentent à la fois :
- une flexibilité supérieure à 1000 % et de préférence supérieure à 1900 %
- un tack inférieur à 95 J/m² et de préférence inférieur à 85 J/m² ;
- une hydrophobie exprimée par un angle de contact supérieur à 90° et de préférence compris entre 100 et 120°.

Comparé à un revêtement obtenu à partir d'un polymère de référence de même Tg, le revêtement selon l'invention présente la même flexibilité, une diminution du tack et une augmentation de l'hydrophobie.

Les revêtements obtenus par le procédé de l'invention contiennent :
* de 60 à 99,5 % en poids et de préférence de 70 à 98 % de motifs issus d'un ou plusieurs monomères (A) choisis dans le groupe I constitué de :
   - esters (méth)acryliques tels que le méthacrylate de méthyle, le méthacrylate de butyle, l'acrylate d'éthyl-2-héxyle
   - les acides (méth)acryliques
   - l'acrylamide et ses dérivés
   - les vinyliques
   - les styréniques tels que le styrène et ses dérivés.

Selon une forme avantageuse de l'invention A est l'acrylate d'éthyl-2 héxyle
* de 0,5 à 40 % en poids et de préférence de 2 à 30 % d'un ou de plusieurs monomères (B) choisi dans le groupe II constitué de :
   - monomères perfluorés (B₁) répondant à la formule générale : 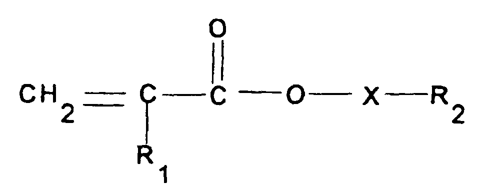 dans laquelle R₁ représente un atome d'hydrogène ou un radical alkyl contenant de 1 à 4 atomes de carbone, R₂ représente un radical perfluoroalkyl à chaîne linéaire ou ramifiée contenant de 1 à 16 atomes de carbone, X représente un enchaînement bivalent lié à 0 par un atome de carbone et pouvant comporter un ou plusieurs atomes d'oxygène, de soufre et/ou d'azote
   - monomères (méth)acryliques (B₂) répondant à la formule générale : 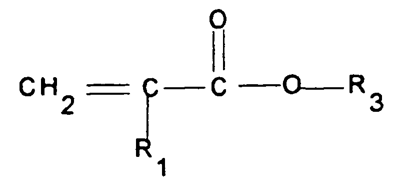 dans laquelle R₃ représente un radical alkyl contenant de 8 à 30 atomes de carbone et de préférence de 18 à 24 atomes de carbone.

Les monomères (B) préférés de l'invention sont pour B₁ l'acrylate d'éthyl-2 perfluorooctyle, désigné ci-après par AC8 et l'acrylate de béhényle pour B₂.

Les monomères (A) constituent la matrice du revêtement et sont choisis de sorte que la Tg du revêtement reste proche de -40°C. Les monomères (B) sont choisis pour leurs propriétés hydrophobantes. Les quantités de monomères (A) et (B) sont définies de manière à ce que le revêtement présente une flexibilité suffisante à la température d'utilisation. Celle-ci dépend bien évidemment de l'application. Par exemple, pour une application externe telle que peinture extérieure pour bâtiment la température d'utilisation est comprise entre -20 et 60°C.

La présente invention a également pour objet un latex consistant en une dispersion de particules ou en un mélange de dispersions de particules. Ces dispersions étant obtenues par la polymérisation en émulsion en milieu aqueux en au moins une étape d'au moins un monomère A choisi dans le groupe I et d'au moins un monomère B choisi dans le groupe II. Les groupes I et II sont ceux définis précédemment.

Les particules en dispersion sont constituées d'un ou de plusieurs polymères différents. Le (les) monomère (s) B peut (peuvent) être réparti (s) sur un ou plusieurs polymères.

Selon une forme de l'invention la totalité de (B) est répartie sur tous les polymères des particules en dispersion. On aboutit à cette forme lorsque la polymérisation porte sur un mélange de monomères contenant A et B.

Selon une autre forme on peut procéder par étape en mélangeant la dispersion obtenue selon la première forme de l'invention avec au moins une autre dispersion obtenue par la polymérisation d'au moins un monomère A.

Quelle que soit la forme de l'invention les particules en dispersion contiennent :
- de 60 à 99,5 % en poids et de préférence de 70 à 98 % d'au moins un monomère A choisi dans le groupe I
- de 0,5 à 40 % en poids et de préférence de 2 à 30 % d'au moins un monomère B choisi dans le groupe II.

L'invention concerne un procédé de synthèse de latex. Ce procédé est basé sur les techniques de polymérisation en émulsion bien connues de l'homme du métier. Ainsi, la réaction est préférentiellement conduite sous atmosphère inerte en présence d'amorceurs radicalaires. Le système d'amorçage utilisé peut être un système Red-Ox tel que Na₂S₂O₈, (NH₄)₂S₂O₈ / Na₂S₂O₅, Na₂SO₃, un système thermique tel que (NH4)₂S₂O₈, les quantités utilisées étant comprises entre 0,2 et 1,0 % en poids par rapport à la masse totale des monomères, préférentiellement entre 0,25 et 0,5 % en poids.

La réaction de polymérisation en émulsion selon l'invention est menée à une température comprise entre 65 et 85°C et est fonction de la nature du système d'amorçage utilisé : 65 - 75°C pour les systèmes Red-Ox à base de peroxodisulfate et de métabisulfite, 70 - 85°C pour les systèmes thermiques à base de peroxodisulfate seul.

La préparation des latex selon l'invention est effectuée selon un procédé de type semi-continu permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures, il est également utile, bien que non indispensable, d'effectuer un ensemencement de 1 à 15 % des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurysulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

La quantité totale d'émulsifiant est généralement comprise dans la gamme de 1 à 5 % en poids et préférentiellement de 2 à 4 % en poids par rapport aux monomères.

La préparation des latex selon l'invention est effectuée selon un procédé dit "shot" qui consiste à introduire le monomère B par coulées rapides successives et ceci afin de créer les zones riches en B.

Les particules en dispersion selon l'invention ont un diamètre compris entre 50 et 500 nm.

Les latex tels que décrits précédemment peuvent être appliqués sur tout support et conduire, après séchage, aux films ou revêtements de l'invention. Ils peuvent aussi être mélangés avec des colorants, des charges minérales ou organiques ou tout autre additif pour constituer une formulation pour revêtements de surface tels que peinture, vernis, mastic, etc...

Les exemples suivants illustrent l'invention sans la limiter :

### Exemple 1 COMPARATIVE

### Préparation des latex A, B et C

Les liants ont été synthétisés de manière classique selon un procédé de polymérisation semi continu par addition simultanée et séparée, d'une solution d'amorceur et d'une préémulsion sur un pied de cuve, préalablement chauffé à 75°C, se trouvant dans le réacteur, équipé d'une circulation d'eau chaude dans la double enveloppe, d'une agitation centrale, et d'un condenseur.

Certaines synthèses ont été réalisées en milieu tamponné du bicarbonate de sodium ayant été, dans ce cas, introduit dans la préémulsion.

### Mode opératoire

Introduire le pied de cuve dans le réacteur, homogénéiser et porter à 75°C.

Lorsque la termpérature du pied de cuve atteint 75°C, couler la préémulsion et la solution d'amorceur en 4 h.

Laisser réagir une heure supplémentaire à 75°C.

Refroidir jusqu'à température ambiante, et filtrer sur toile de 100 microns.

### Exemple 2

### Préparation du latex D

Identique à l'exemple 1 sauf que le monomère B est introduit par vague successive.

### Exemple 3 COMPARATIVE

### Préparation du latex E

Le latex E est obtenu en mélangeant les latex A et C dans un rapport : 83/17.

Le tableau suivant résume les modes opératoires suivis pour la préparation de différents latex (voir tableau 1).

### Exemple 4

### Tests

Tous les latex préparés ont subi les tests suivants :

### 1. Flexibilité

La flexibilité des latex a été évaluée par des tractions-allongement de films de 1.6 mm d'épaisseur séchés 15 jours. Les latex sont démoulés après passage au congélateur de façon à s'affranchir du collant et à éviter d'exercer une pré-déformation aux produits qui sont très mous à température ambiante.

Les éprouvettes sont découpées par l'emporte-pièce ISO 1/2 (polymères Tg = -40°C), la vitesse de traction étant de 200 mm/min.

### 2. Collant superficiel ou "tack"

La mesure du collant de surface s'est faite à l'aide de la sonde de tack utilisée habituellement pour les PSA (pressure sensitive adhésive). La sonde de forme cylindrique Ø 5 mm) vient en contact avec la surface du polymère pendant un temps choisi (de quelques secondes à plusieurs minutes), puis se retire à une vitesse imposée choisie (de 0.01 cm/s à 5 cm/s). Au cours du retrait de la sonde la force exercée sur celle-ci par le film est enregistrée en fonction du déplacement (cm). La mesure du "tack" (J/m²) est donnée par l'énergie calculée par intégration de la courbe force-déplacement.

### 3. Hydrophobie ou tension superficielle

L'hydrophobie des latex se quantifie par la mesure de l'angle de contact que fait une goutte d'eau avec la surface des films.

Les résultats obtenus figurent dans le tableau 2 suivant :

**Tableau 2**

| (*) | COMP. A 0 % AC8 témoin | COMP. B 5 % AC8 homogène | COMP. C 30 % AC8 homogène | D 5 % AC8 shot | COMP. E = A+C 5 % AC8 mélange |
|---|---|---|---|---|---|
| Tg (± 3°C) | -36 | -40 | -34 | -39 | -36 |
| Allgt rupt (%) | 2300 | 2100 | 1900 | 1900 | 2000 |
| Tack (J/m²) | 95 | 81 | 40 | 69 | 65 |
| Θ eau (°) | 90 | 101 | 115 | 107 | 106 |

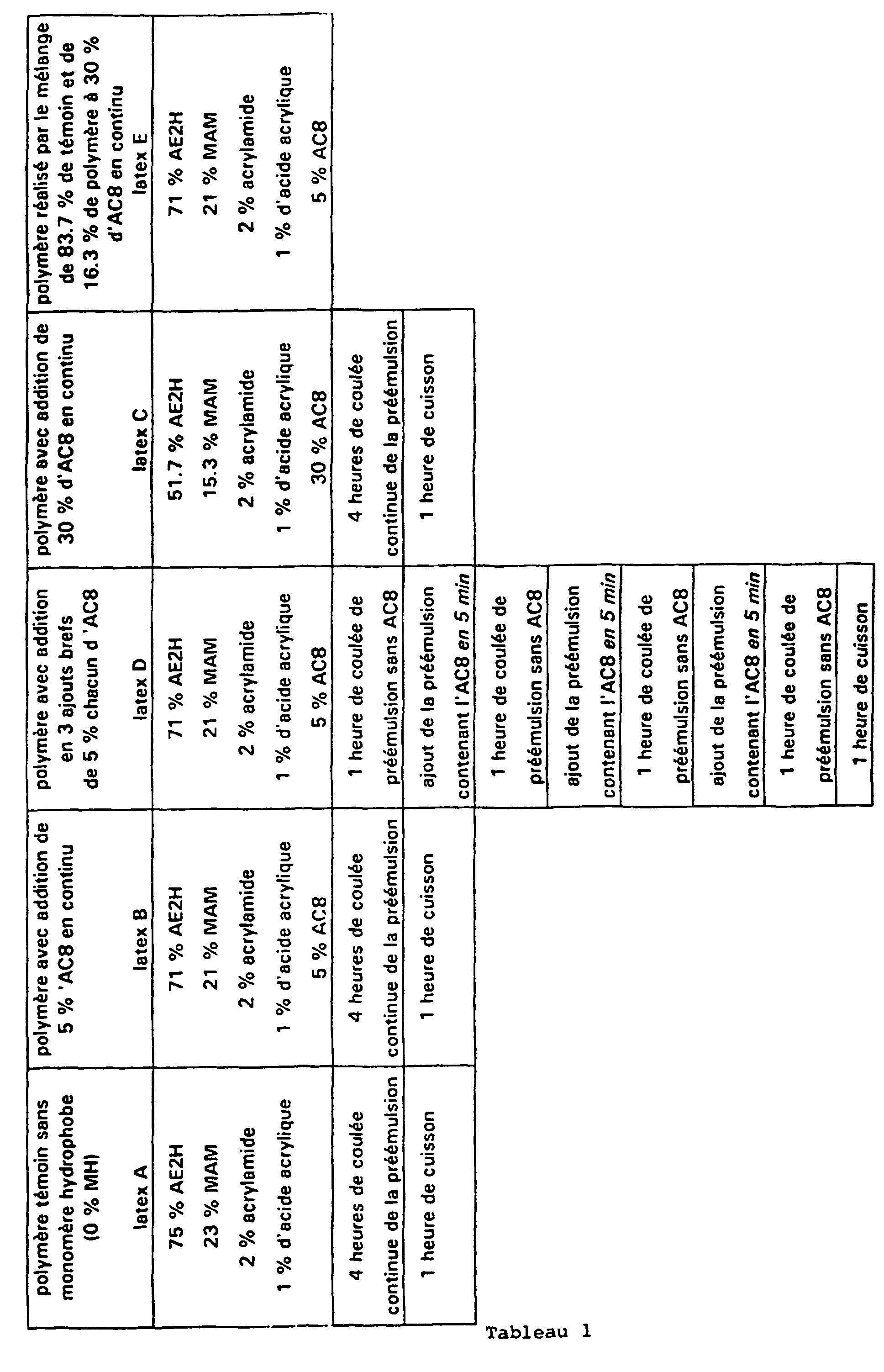

## Revendications

1. Procédé pour l'obtention par polymérisation en émulsion de latex contenant des particules de polymères de diamètre compris entre 50 et 500 nm comprenant:
* de 60 à 99,5 % en poids et de préférence de 70 à 98 % de motifs issus d'un ou plusieurs monomères (A) choisis dans le groupe I constitué de :
- esters (méth)acryliques tels que le méthacrylate de méthyle, le méthacrylate de butyle, l'acrylate d'éthyl-2-héxyle
- les acides (méth)acryliques
- l'acrylamide et ses dérivés
- les vinyliques
- les styréniques tels que le styrène et ses dérivés.
* de 0,5 à 40 % en poids et de préférence de 2 à 30 % d'un ou de plusieurs monomères (B) choisi dans le groupe II constitué de :
- monomères polyfluorés (B₁) répondant à la formule générale : 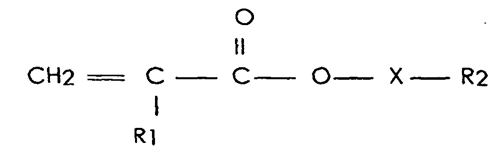 dans laquelle R₁ représente un atome d'hydrogène ou un radical alkyl contenant de 1 à 4 atomes de carbone, R₂ représente un radical perfluoroalkyl à chaîne linéaire ou ramifiée contenant de 1 à 16 atomes de carbone, X représente un enchaînement bivalent lié à 0 par un atome de carbone et pouvant comporter un ou plusieurs atomes d'oxygène, de soufre et/ou d'azote
- monomères (méth)acryliques (B₂) répondant à la formule générale : 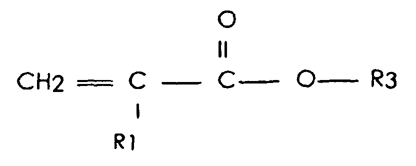
dans laquelle R₃ représente un radical alkyl contenant de 8 à 30 atomes de carbone et de préférence de 18 à 24 atomes de carbone, **caractérisé en ce que** le monomère B est introduit au cours de la polymérisation par coulées successives.

2. Procédé selon la revendication 1 **caractérisé en ce que** le monomère A est l'acrylate d'éthyl-2 héxyle.

3. Procédé selon la revendication 1 ou 2 **caractérisé en ce que** le monomère 8 est l'acrylate d'éthyl-2 perfluorooctyle ou l'acrylate de Béhényle.

4. Latex contenant des particules de polymères de diamètre compris entre 50 et 500 nm obtenus selon le procédé selon l'une des revendications 1 à 3.

5. Latex selon la revendication 4 comprenant en outre des colorants, des charges minérales ou organiques ou tout autre additif pour constituer une formulation pour revêtements de surface.

6. Procédé pour le traitement de surface par le dépôt d'un film **caractérisé en ce qu'**on applique sur la surface un latex selon l'une des revendications 4 ou 5.

## Patentansprüche

1. Verfahren zur Herstellung eines Polymerteilchen mit einem Durchmesser zwischen 50 und 500 nm, enthaltend:
• 60 bis 99,5 Gew.-% und vorzugsweise 70 bis 98% an Einheiten, die sich von einem oder mehreren Monomeren (A) aus der Gruppe I bestehend aus:
- (Meth)acrylsäureestern, wie Methylmethacrylat, Butylmethacrylat und 2-Ethylhexylacrylat,
- (Meth)acrylsäure
- Acrylamid und dessen Derivaten
- Vinylverbindungen
- Vinylaromaten, wie Styrol und dessen Derivaten,
ableiten,
• 0,5 bis 40 Gew.-% und vorzugsweise 2 bis 30% eines oder mehrerer Monomere (B) aus der Gruppe II bestehend aus:
- Polyfluormonomeren (B₁) der allgemeinen Formel: 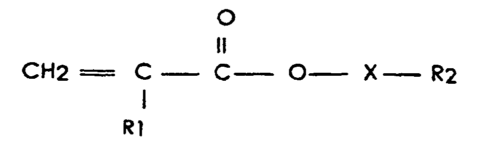 worin R₁ für ein Wasserstoffatom oder einen Alkylrest mit 1 bis 4 Kohlenstoffatomen steht, R₂ für einen gerad- oder verzweigtkettigen Perfluoralkylrest mit 1 bis 16 Kohlenstoffatomen steht, X für eine zweiwertige Verknüpfungsgruppe steht, die über ein Kohlenstoffatom an 0 gebunden ist und ein oder mehrere Sauerstoff-, Schwefel- und oder Stickstoffatome enthalten kann,
- (Meth)acrylmonomeren (B₂) der allgemeinen Formel: 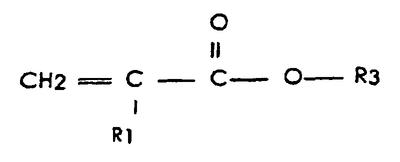 worin R₃ für einen Alkylrest mit 8 bis 30 Kohlenstoffatomen und vorzugsweise 18 bis 24 Kohlenstoffatomen steht,
enthaltenden Latex durch Emulsionspolymerisation, **dadurch gekennzeichnet, daß** man das Monomer B im Lauf der Polymerisation durch aufeinanderfolgende Zuläufe einträgt.

2. Verfahren nach Anspruch 1, **dadurch gekennzeichnet, daß** es sich bei dem Monomer A um 2-Ethylhexylacrylat handelt.

3. Verfahren nach Anspruch 1 oder 2, **dadurch gekennzeichnet, daß** es sich bei dem Monomer B um 2-Ethylperfluoroctylacrylat oder Behenylacrylat handelt.

4. Latices, enthaltend Polymerteilchen mit einem Durchmesser zwischen 50 und 500 nm, die nach einem Verfahren gemäß einem der Ansprüche 1 bis 3 erhältlich sind.

5. Latices nach Anspruch 4, ferner enthaltend Farbstoffe, anorganische oder organische Füllstoffe oder andere Additive zur Bildung einer Formulierung zur Beschichtung von Oberflächen.

6. Verfahren zur Behandlung einer Oberfläche durch Aufbringen eines Films, **dadurch gekennzeichnet, daß** man auf die Oberfläche einen Latex gemäß einem der Ansprüche 4 oder 5 aufträgt.

## Claims

1. Method for obtaining a latex by emulsion polymerization, this latex containing polymer particles having a diameter between 50 and 500 nm and comprising:
• 60 to 99.5%, preferably 70 to 98%, by weight of units resulting from one or more monomers (A) chosen from group I consisting of:
- (meth)acrylic esters, such as methyl methacrylate, butyl methacrylate and 2-ethylhexyl acrylate,
- (meth)acrylic acids,
- acrylamide and its derivatives,
- vinyl monomers and
- styrene monomers, such as styrene and its derivatives;
• 0.5 to 40%, preferably 2 to 30%, by weight of one or more monomers (B) chosen from group II consisting of:
- polyfluorinated monomers (B₁) satisfying the general formula: 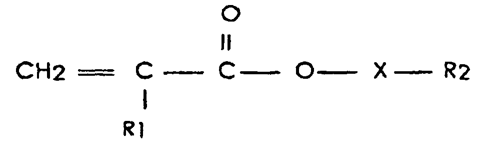 in which R₁ represents a hydrogen atom or an alkyl radical containing 1 to 4 carbon atoms, R₂ represents a perfluoroalkyl radical with a linear or branched chain containing 1 to 16 carbon atoms, X represents a divalent chain unit linked to a 0 via a carbon atom and possibly comprising one or more oxygen, sulphur and/or nitrogen atoms, and
- (meth)acrylic monomers (B₂) satisfying the general formula: 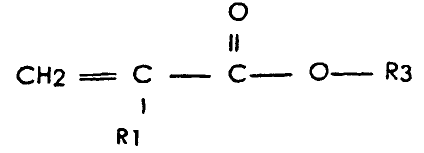
in which R₃ represents an alkyl radical containing 8 to 30 carbon atoms and preferably 18 to 24 carbon atoms,
**characterized in that** the monomer B is introduced, in successive stages, by pouring it in during the polymerization.

2. Method according to Claim 1, **characterized in that** monomer A is 2-ethylhexyl acrylate.

3. Method according to Claim 1 or 2, **characterized in that** monomer B is 2-ethylperfluorooctyl acrylate or behenyl acrylate.

4. Latex containing polymer particles having a diameter of between 50 and 500 nm, obtained by the method according to one of Claims 1 to 3.

5. Latex according to Claim 4, which further includes dyes, mineral or organic fillers or any other additive in order to make up a formulation for surface coatings.

6. Method for treating a surface by depositing a film thereon, **characterized in that** a latex according to either of Claims 4 and 5 is applied to the surface.
